# EUROPÄISCHE PATENTSCHRIFT

(11) **EP 1 701 037 B1**
(45) Veröffentlichungstag und Bekanntmachung des Hinweises auf die Patenterteilung: **19.09.2007**
(21) Anmeldenummer: 06100639.1
(22) Anmeldetag: 20.01.2006
(51) Int. Cl.: F04B 39/16, F04C 29/00, B01D 53/26, F24F 3/14, F25B 17/08

(54) **Verfahren zur Entfeuchtung von Luft im Ansaugluftstrom eines Druckluftkompressors**
Process for dehumidifying the air in the inlet suction flow of an air compressor
Procédé de séchage de l'air dans le flux d'aspiration d'un compresseur à air

(30) Priorität: 01.03.2005 DE 102005014412
(43) Veröffentlichungstag der Anmeldung: 13.09.2006
(73) Patentinhaber: MANN+HUMMEL GmbH, 71638 Ludwigsburg (DE)
(72) Erfinder: Bartelt, Bertram, 71711, Steinheim (DE)

(56) Entgegenhaltungen:
- EP-A- 0 123 061
- EP-A- 0 382 937
- WO-A-95/29371
- WO-A-03/095917
- DE-A1- 3 637 071
- DE-A1- 3 838 849

## Beschreibung

Die Erfindung betrifft ein Verfahren zur Entfeuchtung von Luft im Ansaugluftstrom eines Druckluftkompressors und ein dafür geeignetes Druckluftaufbereitungssystem.

Zur Erzeugung von Druckluft wird in der Regel Umgebungsluft angesaugt und komprimiert. Die in der Luft enthaltene Feuchtigkeit kondensiert und muss abgeschieden werden, damit die nachgeschalteten Druckluftverbraucher trockene Luft erhalten. Für die Entölung und Entfeuchtung von Druckluft sind zahlreiche Lösungen bekannt, die jedoch dem Kompressor nachgeschaltet sind. Da aber feuchte Luft angesaugt wird, kann es bereits innerhalb des Kompressors zur Abscheidung von Feuchtigkeit kommen, was zu Korrosion führen kann.

Aus der DE-Z "BOGE Druckluftkompendium" (6. Aufl. 2004, Hersausgeber: Fa. BOGE, Hoppenstedt-Verlag, Darmstadt) ist es bekannt, eine Entfeuchtung der Druckluft nach der Kompressorenstufe über Adsorptionseinrichtungen vorzunehmen, bei denen es sich um durchströmbare Behälter handelt, die mit einer luftdurchlässigen Schüttung körniger, hygroskopischer Trocknungsmittel wie beispielsweise Silica-Gel gefüllt sind. Beim Durchströmen lagern sich die Wassermoleküle an die Trocknungsmittel an, werden also der zum Verbraucher geführten Zuluft entzogen. Nach einer bestimmten Betriebsdauer ist die Entfeuchtungswirkung erschöpft, so dass eine Regeneration des Trocknungsmittels vorgenommen werden muss, beispielsweise als so genannte externe Warmregeneration durch Einleitung heißer trockener Luft, die von einer Zusatzheizung erzeugt wird, über ein Gebläse. Bekannt ist es, zur Druckluftentfeuchtung zwei Adsorptionseinrichtungen im Wechsel zu betreiben, wobei die eine Feuchtigkeit adsorbiert und die andere mit heißer Luft regeneriert wird. Für den Betrieb des Gebläses und die Erwärmung der Regenerationsluft, die samt Wasserdampf in die Umgebung ausgeblasen wird, ist eine erhebliche Energiemenge erforderlich. Durch die bekannte Entfeuchtungseinrichtung wird der Kompressor selbst nicht vor Korrosion durch Kondensatanfall geschützt.

Das Dokument EP 0 123 061 A1 offenbart in ähnlicher Weise ein Verfahren sowie ein Druckluftaufbereitungssystem zur Entfeuchtung von Luft eines Druckluftkompressors. Hierzu sind zwei mit einem Adsorptionsmittel gefüllte Kammern vorgesehen, welche abwechselnd mit einem Verbraucher verbunden werden können. Zur Regeneration des Adsorptionsmittels wird die nicht mit dem Verbraucher verbundene Kammer mit einem Teilstrom der Druckluft beaufschlagt, wobei der Regenerationsluftstrom in die Atmosphäre abgeleitet wird. Solange eine Kammer regeneriert wird, ist die andere Kammer mit dem Verbraucher verbunden. Nach der Regeneration wird über Ventile die regenerierte Kammer mit dem Verbraucher verbunden und die andere Kammer regeneriert. Der Kompressor selbst wird bei dem offenbarten Druckluftaufbereitungssystem ebenfalls nicht vor Korrosion durch Kondensatanfall geschützt.

Aufgabe der Erfindung ist es daher, ein Verfahren zur Entfeuchtung von Luft im Ansaugluftstrom eines Druckluftkompressors und ein Druckluftaufbereitungssystem anzugeben, mit denen ein Anfall von Kondensat im Kompressor vermieden oder zumindest deutlich reduziert werden kann.

Diese Aufgabe wird durch ein Verfahren mit den Merkmalen des Anspruchs 1 und ein Druckluftaufbereitungssystem mit den Merkmalen des Anspruchs 10 gelöst.

Das erfindungsgemäße Verfahren und das erfindungsgemäße Druckluftaufbereitungssystem beruhen auf folgendem Grundprinzip:
Während mit einer ersten Adsorptionseinrichtung der Ansaugluft Feuchtigkeit entzogen wird, werden die hygroskopischen Mittel in einer zweiten Adsorptionseinrichtung regeneriert, das heißt, es wird dort Feuchtigkeit desorbiert und mit der Regenerationsluft abgeführt. Die vom Kompressor angesaugte Luft ist weitgehend trocken. Ein Kondensatanfall im Kompressor und damit eine Korrosionsgefahr von Kompressorteilen werden reduziert. Ein weiterer Vorteil der Erfindung besteht darin, dass die Kompressorabwärme, die ohnehin der erzeugten Druckluft über einen Kühler entzogen werden muss, bevor diese in die Arbeitsleitung abgegeben werden kann, zur Regeneration der Adsorptionseinrichtung genutzt werden kann. Die Druckluft wird vorzugsweise mit nur geringen Druckverlusten zurück in die Druckluftarbeitsleitung ausgangs des Kompressors geführt.

Der Grundtyp des erfindungsgemäßen Verfahrens gemäß Anspruch 1 bietet sich vor allem dann an, wenn durch niedrige Luftfeuchte, nur intervallweise Ansaugung etc. während der Ansaugphase nur soviel Feuchtigkeit adsorbiert wird, dass diese während einer gleich langen Regenerationsphase vollständig desorbiert werden kann.

Bei einem Dauerbetrieb und/oder hoher Luftfeuchtigkeit in der Ansaugluft hingegen sollten mehr als zwei Adsorptionseinrichtungen vorgesehen sein.

So kann beispielsweise die Ansaugluft über zwei Adsorptionseinrichtungen während einer Zykluszeit angesaugt werden und zwar parallel, wobei dann jede Adsorptionseinrichtung nur einen Teilvolumenstrom aufnimmt. Die Ansaugung über parallele Adsorptionseinrichtungen ist insofern vorteilhaft, als jede Adsorptionseinrichtung einen Strömungswiderstand darstellt. Bei einer Luftführung über parallele Adsorptionseinrichtungen mit Teilvolumenströmen ist der Differenzdruck folglich geringer.

Bei den vorstehend dargestellten Ausbildungen des erfindungsgemäßen Verfahrens sind idealer Weise die Regenerationsphasen genau so lang wie die Ansaugphasen. Damit ist eine dauernde Umschaltung und insgesamt ein kontinuierlicher Betrieb möglich, ohne dass zusätzliche Adsorptionseinrichtungen als Reserve vorgehalten werden müssen.

Möglich ist auch, während einer Ansaugphase zwei Adsorptionseinrichtungen sequentiell während Teilansaugphasen halber Dauer zu beaufschlagen. Damit kann jeweils eine der Adsorptionseinrichtungen frühzeitig herausgelöst und regeneriert werden. Damit hier ebenfalls eine ständige Umschaltung ohne Reserven möglich ist, sollten die Teilansaugphasen gleich lang sein. Zwei Teilansaugphasen sollten während einer Regenerierungsphase statt finden.

Bei der Verwendung von mehr als zwei Adsorptionseinrichtungen pro Ansaugphase müssen naturgemäß auch zwei weitere Adsorptionseinrichtungen vorhanden sein, die im Kreislauf des erfindungsgemäßen Verfahrens unterdessen regeneriert werden. Je nach Befrachtung der Adsorptionseinrichtungen mit Feuchtigkeit, nach der Temperatur der Druckluft am Kompressorausgang etc. reicht die Aufnahmekapazität der zur Regeneration abgezweigten Druckluftmenge evtl. nicht aus, um in der zur Verfügung stehenden Zeit die während der Ansaugphase aufgenommene Feuchtigkeit auch wieder vollständig zu desorbieren. Insbesondere für diesen Fall wird vorgeschlagen, dass in jeder Regenerationsphase t_{R1}, t_{R2} erwärmte Druckluft in eine Adsorptionseinrichtung geleitet wird und zugleich mittels eines Gebläses und einer Zusatzheizung warme Luft erzeugt und durch eine weitere zu regenerierende Adsorptionseinrichtung geleitet wird.

Vorgesehen sein kann auch eine Zusatzheizung, die den zur Regeneration heran geführten Druckluftstrom vor dem Eintritt in die Adsorptionseinrichtung noch zusätzlich erwärmt und dadurch dessen desorbierende Wirkung erhöht.

Die Erfindung wird nachfolgend mit Bezug auf die Zeichnung näher erläutert. Die Figuren zeigen im Einzelnen:
- Fig. 1: eine erste Ausführungsform eines Druckluftaufbereitungssystems in einem Blockschaltbild;
- Fig. 2: eine zweite Ausführungsform eines Druckluftaufbereitungssystems in einem Blockschaltbild; und
- Fig. 3: die Abfolge der Phasen des Verfahrens in einem Zeitablaufdiagramm.

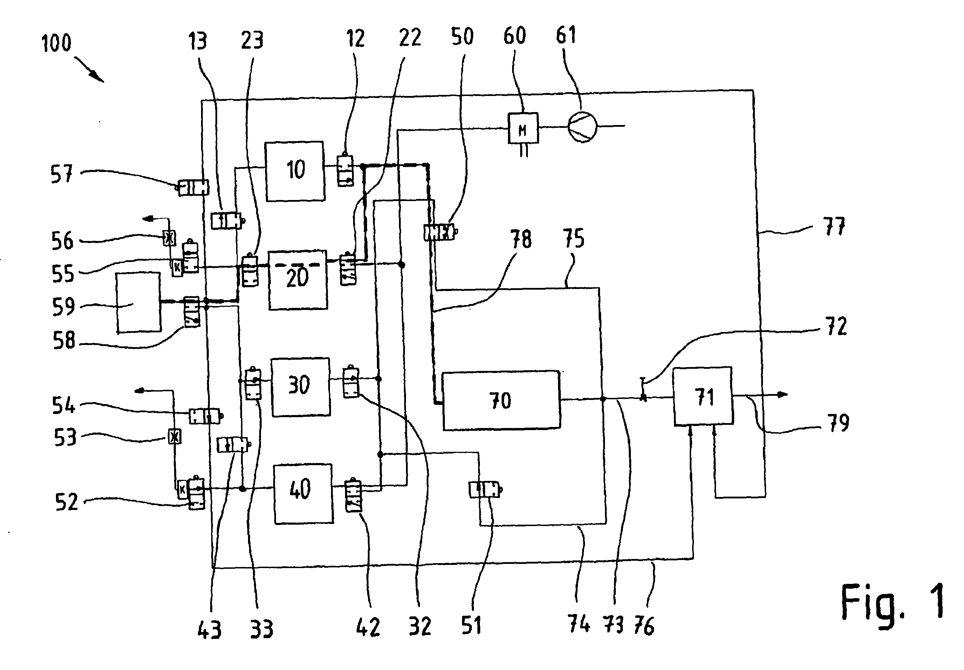

Fig. 1 zeigt eine bevorzugte Ausführungsform eines erfindungsgemäßen Druckluftaufbereitungssystems 100. Dieses weist vier Adsorptionseinrichtungen 10, 20, 30, 40 auf, die paarweise für die Zulufttrocknung zur Verfügung stehen bzw. regeneriert werden.

Eingangsseitig, an einer zu einem Luftfilter 59 hin gewandten Seite, sind alle vier Adsorptionseinrichtungen 10, 20, 30, 40 mit je wenigstens einem Eingangsventil 13, 23, 33, 43 absperrbar.

Ein zentrales Zuluftumschaltventil 58 schließt sich an den Luftfilter 59 an und ermöglicht eine Umschaltung der Zuluft von dem oberen Paar der Adsorptionseinrichtungen 10, 20 auf das untere Paar der Adsorptionseinrichtungen 30, 40. Innerhalb dieses Paares erfolgt die Zuluftverteilung dann jeweils über die Schaltung der Eingangsventile 13, 23 bzw. 33, 43.

Ausgangsseitig, also einer Kompressoransaugleitung 78 zu gewandt, sind Ausgangsventile 12, 22, 32, 42 an jeder Adsorptionseinrichtung 10, 20, 30, 40 vorhanden, vor allem, um diese gegenüber den verschiedenartigen Trocknungsluftströmen abzusperren oder zu öffnen, welche rückwärts durch die Adsorptionseinrichtungen zur Regeneration eingeleitet werden können.

Zwei Adsorptionseinrichtungen 20, 30 sind jeweils über ein Drosselsperrventil 52, 55 mit einer Drossel 53, 56 zu verbinden. Dieselben Adsorptionseinrichtungen 20, 30 sind ausgangsseitig mit einer Heizung 60 und einem Gebläse 61 verbunden, wobei diese Verbindung über die als Umschaltventile ausgebildeten Ventile 22, 42 zu öffnen oder zu sperren ist. In der in Fig. 1 gezeigten Ventilstellung ist dieser Weg bei der Adsorptionseinrichtung 30 geöffnet, während bei der Adsorptionseinrichtung 20 das Ventil 22 diesen Weg sperrt, dafür aber eine Verbindung zur Ansaugleitung 78 des Kompressors 70 herstellt.

Die anderen beiden Adsorptionseinrichtungen sind nicht mit dem Warmluftgebläse 60, 61 und auch nicht über Drosseln 53, 56 mit der Umgebungsluft zu verbinden, sondern sie sind wechselseitig in einen Kreislauf hinein zu schalten, in dem warme Druckluft vom Ausgang des Kompressors 70 über Trockenluftleitungen 74, 75 und Trockenluftventile 50, 51 in die Adsorptionseinrichtungen hinein strömt und an deren dem Luftfilter zugewandten Anschlussseite wieder heraus. Von dort wird dann die Druckluft über Rückführungsventile 54, 57, Rückführungsleitungen 76, 77 und den Kühler 71 in eine Druckluftarbeitsleitung 79 geleitet, von der aus die Druckluftverbraucher bedient werden.

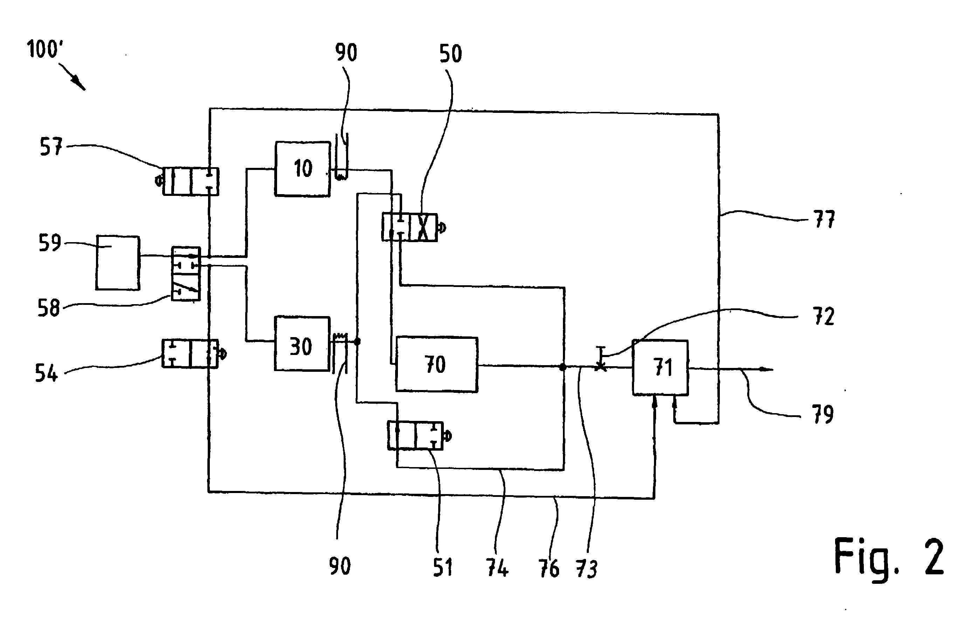

Fig. 2 zeigt eine zweite Ausführungsform eines erfindungsgemäßen Druckluftaufbereitungssystems 100', das gegenüber dem zuvor dargestellten System 100 wesentlich vereinfacht ist. Hier werden nur zwei Adsorptionseinrichtungen 10, 30 eingesetzt, die entweder in den Ansaugluftstrom des Kompressors 70 oder in den Trocknungsluftstrom geschaltet sind. Die Umschaltung erfolgt durch das Zuluftumschaltventil 58, das einem Luftfilter 59 nachgeschaltet ist.

Auch bei dieser Ausführungsform ist es möglich, warme Druckluft von der Kompressorausgangsleitung 73 durch eine der Adsorptionseinrichtungen 10, 30 und zurück über den Kühler in die Druckluftarbeitsleitung 79 zu leiten, so dass die von dem hygroskopischen Material absorbierte Feuchtigkeit wieder aufgenommen und abgeführt wird.

Um den Wirkungsgrad bei der Entfeuchtung zu erhöhen, kann die rückgeleitete Trocknungsdruckluft noch über eine externe Beheizung 90 unmittelbar vor der Einleitung in die Adsorptionseinrichtung 10 oder 30 erwärmt werden.

Das Verfahren der Erfindung wird nachfolgend zunächst generell und dann anhand eines Ausführungsbeispiels noch näher erläutert. Bezug genommen wird dabei jeweils auf das bevorzugte Druckluftaufbereitungssystem 100 gemäß Fig. 1.
a) Die gesamte Ansaugluft wird über eine oder mehrere parallele Adsorptionseinrichtungen 10, 20 nacheinander oder parallel geführt, also getrocknet, und dann durch den Kompressor 70 auf ca. 80-95 °C erhitzt.
   Die gesamte heiße Luft wird danach, beispielsweise mit 7 bar, über eine oder mehrere feuchte Adsorptionseinrichtungen 30, 40 geführt, die dadurch im Wesentlichen regeneriert werden. Danach wird diese nun wieder feuchte Luft in den Kühler des Kompressors geleitet und geht weiter z. B. über eine nachgeschaltete Druckluftaufbereitung, womit die kalte, wieder feuchte Luft mit den herkömmlichen Anlagen entfeuchtet werden kann.
   Mit dieser Ausführungsform des Verfahrens wird zunächst nur der Kompressor vor Feuchtigkeit geschützt.
   Die Regeneration der Adsorptionseinrichtungen 30, 40 wird dabei durch z.B. ein externes Gebläse 61 mit Heizung 60 unterstützt, da die heiße, vom Kompressor 70 kommende Luft nicht allein vollständig beide Adsorptionseinrichtungen 30, 40 im gleichen Zeitraum regenerieren kann, wie die Adsorptionseinrichtungen 10, 20 von der Ansaugluft befeuchtet werden. Es soll ein kontinuierlicher Ablauf stattfinden.
   Wenn die Zeiten t_{A} und t_{R} empirisch ermittelt sind und Maximalfeuchtigkeiten in der Luft abdecken, werden keine Messinstrumente benötigt, um einen einwandfreien Prozess zu steuern.
b) Die gesamte Ansaugluft wird wiederum, wie oben beschrieben, über Adsorptionseinrichtungen 10, 20 getrocknet und vom Kompressor 70 erhitzt. Von der heißen Luft wird nur ein kleiner Teil, z. B. 5-10 % mit z.B. 7 bar abgezweigt, der für die Regeneration der Adsorptionseinrichtungen 30, 40 genutzt wird und anschließend über die Drosseln 53, 56 an die Umwelt abgegeben wird. Diese Luft ist dann für den Druckluftverbraucher verloren.
   Parallel wird die Trocknung der Adsorptionseinrichtungen 30, 40 z. B. noch mittels des Gebläses 61 mit Heizung 60 durchgeführt. In diesem Fall ist der große Anteil der vom Kompressor 70 kommenden heißen Luft getrocknet und wird nicht zum Regenerieren der Adsorptionseinrichtungen 30, 40 eingesetzt, sondern direkt in den Kühler 71 geführt. Eine weitere nachgeschaltete Drucklufttrocknung über sich anschließende Anlagen kann in diesem Fall dann entfallen.
c) Alternativ zur unter b) beschriebenen Ausführungsform des Verfahrens kann der abgezweigte kleinere Teil auch zur Regeneration der Adsorptionseinrichtungen 30, 40 parallel zum Gebläse 60 mit Heizung 61 eingesetzt werden und wird dann nicht über eine Entspannungsdrossel an die Umwelt abgegeben, sondern wird wieder als feuchte Luft in den Kühler 71 zurückgeführt. In diesem Fall wird die Blende 72 benötigt. Die anschließende herkömmliche Drucklufttrocknung kann dann zwar nicht entfallen; sie kann jedoch kleiner ausfallen als im Stand der Technik.

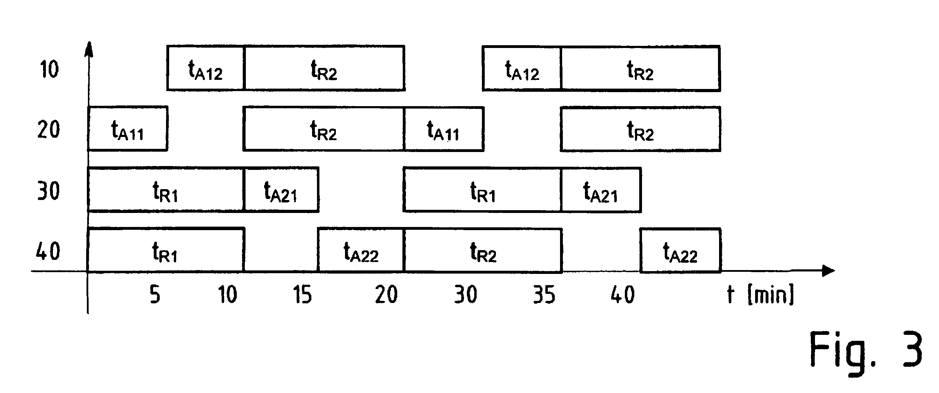

Nachfolgend wird eine mögliche Ausführungsform einer erfindungsgemäßen Verfahrensführung detailliert beschrieben. Die verschiedenen Ansaug- und Regenerationsphasen, die teilweise nacheinander, teilweise parallel statt finden, sind in dem Zeitablaufdiagramm in Fig. 3 schematisch dargestellt, in welchem die Nummern 10, 20, 30, 40 für die jeweilige Adsorptionseinrichtung stehen:

Die erste Adsorptionseinrichtung 20 wird mit der gesamten Ansaugluft beaufschlagt und zwar während einer ersten Teilansaugphase t_{A10}. Die Zeitdauer richtet sich nach verschiedenen Faktoren betreffend die Adsorption wie dem Feuchteanteil der angesaugten Luft, der Kapazität der Adsorptionseinrichtung etc. aber auch dem Zeitbedarf für anschließende Desorption. In dem Beispiel wird eine Zeitdauer für die erste Teilansaugphase t_{A12} von 5 min gewählt.

Warme Druckluft, die mit einer Temperatur von etwa 80°C und einem Druck von etwa 7,5 bar von der Kompressorausgangsleitung 76 abgezweigt wird, wird unterdessen vollständig über die zweite Adsorptionseinrichtung 30 geführt, wo eine Desorption ohne Entspannung erfolgt, und diese etwa zur Hälfte ihrer Kapazität regeneriert. Anschließend wird die Luft in den Kühler 71 zurückgeführt, wo sie noch einen Druck von etwa 7,2 bar hat. Um hier die Wiedereinleitung des zur Regenration benutzten Druckluftstroms über den Kühler 71 zu ermöglichen, ist in der Kompressorausgangsleitung 73 eine Blende 72 oder Drossel eingesetzt, um den Druck im Kühler auf ca. 7 bar herab zu setzen.

Nach der ersten Teilansaugphase t_{A10} von 5 min ist die erste Adsorptionseinrichtung 20 erschöpft und die gesamte Ansaugluft wird über die dritte Adsorptionseinrichtung 10 geführt. Diese wird während einer zweiten Teilansaugphase t_{A10} von ebenfalls 5 min beaufschlagt. Die heiße Luft vom Kompressor 70 wird immer noch über die zweite Adsorptionseinrichtung 30 zur Desorption ohne Entspannung geführt und geht dann über den Kühler 71 in die Druckluftarbeitsleitung 79. Die zweite Adsorptionseinrichtung 30 wird somit insgesamt während einer ersten Regenerationsphase t_{R1} von 10 min mit heißer Luft beaufschlagt.

Während die erste Adsorptionseinrichtung 20 und die dritte Adsorptionseinrichtung 10 nacheinander, oder mit Teilluftströmen auch parallel, mit der Ansaugluft beaufschlagt werden und während die zweite Adsorptionseinrichtung 30 über erwärmte Druckluft regeneriert wird, wird die vierte Adsorptionseinrichtung 40 über ein externes Gebläse 61 mit Heizung 60 regeneriert. Die erwärmte Regenerationsluft wird an die Umgebung abgegeben.

Durch die gleichzeitige Regeneration einer Adsorptionseinrichtung über die Abwärme des Kompressors 70 und einer weiteren Adsorptionseinrichtung über eine externe Heizung 60 während der ersten Regenerationsphase t_{R1} ist in der überwiegenden Zahl der Anwendungen gewährleistet, dass die gesamte Feuchtigkeit, die während des Ansaugens von Zuluft in der jeweiligen Adsorptionseinrichtung absorbiert worden ist, auch wieder daraus entfernt wird, so dass nicht die Gefahr besteht, dass die Adsorptionsfähigkeit der Adsorptionseinrichtungen 10, 20, 30, 40 bei zunehmender Betriebsdauer schwindet.

Die Ansaugung erfolgt in der zweiten Ansaugphase erstmalig über die zweite Adsorptionseinrichtung 30 für eine Teilansaugphase t_{A20} über 5min, dann erfolgt die Umschaltung der Ansaugung auf die vierte Adsorptionseinrichtung 40 für ebenfalls 5 min.

Währenddessen werden diejenigen Adsorptionseinrichtungen 10, 30, die zuvor die Zuluft entfeuchtet hatten, wieder regeneriert. Die heiße Druckluft vom Kompressor 70 trocknet die dritte Adsorptionseinrichtung 10 während 10 min. Über das externe Gebläse 61 mit Heizung 60 erfolgt die Entfeuchtung der Adsorptionseinrichtung 20 mittels Entspannung.

### Bezugszeichenliste

- 10, 20, 30, 40: Adsorptionseinrichtung
- 12, 22, 32, 42: Ausgangsventil
- 13, 23, 33, 43: Eingangsventil

- 50: Trockenluftventil
- 54, 57: Rückführungsventile
- 59: Luftfilter

- 60: Heizung
- 61: Gebläse

- 70: Kompressor
- 71: Kühler
- 72: Drossel
- 73: Kompressorausgangsleitung
- 74, 75: Trockenluftleitungen
- 76, 77: Rückführungsleitungen
- 78: Kompressoransaugleitung
- 79:

## Patentansprüche

1. Verfahren zur Entfeuchtung von Luft im Ansaugluftstrom eines Druckluftkompressors (70), unter Verwendung von wenigstens zwei durchströmbaren Adsorptionseinrichtungen (10, 20, 30, 40), die ein regenerierbares hygroskopisches Material enthalten, wobei Luft über wenigstens eine Ansaugleitung angesaugt, in einem Kompressor (70) zu Druckluft komprimiert und an eine Druckluftarbeitsleitung (79) abgegeben wird,
mit folgenden Schritten:
- Ansaugen des Ansaugluftstroms unter Adsorption der in der Luft enthaltenen Feuchtigkeit während einer Ansaugphase t_{A1} über wenigstens eine erste Adsorptionseinrichtung (20),
- Regeneration des hygroskopischen Materials in einer zweiten Adsorptionseinrichtung (30) während einer ersten Regenerationsphase t_{R1},
- Umschalten des Ansaugluftstroms, Ansaugen des Ansaugluftstroms unter Adsorption der in der Luft enthaltenen Feuchtigkeit über die zweite Adsorptionseinrichtung (30),
- Regeneration des hygroskopischen Materials in der ersten Adsorptionseinrichtung (20) während einer zweiten Regenerationsphase t_{R2},
- Wiederholung der Schritte,
wobei zur Regeneration des hygroskopischen Materials ein Teilstrom erwärmter Druckluft zwischen dem Kompressor (70) und einem diesem nachgeschalteten Kühler (71) abgeleitet wird und nach Durchströmen wenigstens einer Adsorptionseinrichtung (10, 20, 30, 40) über den Kühler (71) in die Druckluftarbeitsleitung (79) zurück geführt wird.

2. Verfahren nach Anspruch 1, **dadurch gekennzeichnet, dass**
- in der ersten Ansaugphase t_{A1} Ansaugluft in einem ersten Teilvolumenstrom über die erste Adsorptionseinrichtung (20) und zugleich in einem zweiten Teilvolumenstrom über eine dritte Adsorptionseinrichtung (10) geführt wird und
- in der zweiten Ansaugphase t_{A2} Ansaugluft in einem ersten Teilvolumenstrom über die zweite Adsorptionseinrichtung (30) und zugleich in einem zweiten Teilvolumenstrom über eine vierte Adsorptionseinrichtung (40) geführt wird.

3. Verfahren nach Anspruch 1 oder 2, **dadurch gekennzeichnet, dass** die Dauer der Ansaugphasen t_{A1}, t_{A2} der jeweiligen Dauer der sich anschließenden Regenerationsphase t_{R1}, t_{R2} entsprechen.

4. Verfahren nach Anspruch 1, **dadurch gekennzeichnet, dass**
- in der ersten Ansaugphase t_{A1} Ansaugluft nacheinander während einer Teilansaugphase t_{A10} über die erste Adsorptionseinrichtung (20) und dann während einer Teilansaugphase t_{A12} über eine dritte Adsorptionseinrichtung (10) geführt wird und
- in der zweiten Ansaugphase t_{A2} Ansaugluft nacheinander während einer Teilansaugphase t_{A20} über die zweite Adsorptionseinrichtung (30) und dann während einer Teilansaugphase t_{A22} über eine vierte Adsorptionseinrichtung (40) geführt wird.

5. Verfahren nach Anspruch 4, **dadurch gekennzeichnet, dass** die erste und die zweite Ansaugphase t_{A1}, t_{A2} jeweils in zwei Teilansaugphasen t_{A10}, t_{A12}, t_{A20}, t_{A22} gleicher Dauer unterteilt sind

6. Verfahren nach Anspruch 5, **dadurch gekennzeichnet, dass** die erste Regenerationsphase t_{R1} während der Teilansaugphasen t_{A10}, t_{A12}, und die zweite Regenerationsphase t_{R2} während der Teilansaugphasen t_{A20}, t_{A22} erfolgt.

7. Verfahren nach einem der Ansprüche 2 bis 6, **dadurch gekennzeichnet, dass** in jeder Regenerationsphase t_{R1}, t_{R2} erwärmte Druckluft in eine Adsorptionseinrichtung (10, 30) geleitet wird und zugleich mittels eines Gebläses (61) und einer Zusatzheizung (60) warme Luft erzeugt und durch eine weitere Adsorptionseinrichtung (20, 40) geleitet wird.

8. Verfahren nach einem der Ansprüche 1 bis 7, **dadurch gekennzeichnet, dass** die erwärmte Druckluft vom Kompressor (70) vor der Einleitung in eine Adsorptionseinrichtung (10, 20, 30, 40) durch eine Zusatzheizung (90) erwärmt wird.

9. Verfahren nach einem der Ansprüche 1 bis 8, **dadurch gekennzeichnet, dass** die Druckluft zwischen Kompressor (70) und Kühler (71) auf einen Druck entspannt wird, der kleiner ist als der Druck in einer Rückführungsleitung (76, 77).

10. Druckluftaufbereitungssystem (100, 100') zur Durchführung des Verfahrens nach einem der vorhergehenden Ansprüche 1 bis 9 mit wenigstens:
- zwei durchströmbaren und mit hygroskopischem Material gefüllten Adsorptionseinrichtungen (10, 30),
- einem Kompressor (70), dessen Kompressorausgangsleitung (73) mit einem Kühler (71) verbunden ist,
- einem Zuluftumschaltventil (58) zum Verbinden einer Zuluftleitung mit wenigstens einer Adsorptionseinrichtung (10, 30),
- einem Trockenluftventil (50) zur Aufschaltung wenigstens einer Adsorptionseinrichtung (10, 30) auf die Kompressoransaugleitung (78),
- einem Regenerationsluftventil (57, 58) zur Aufschaltung wenigstens einer von einer Adsorptionseinrichtung (10, 20, 30, 40) ausgehenden Rückführungsleitung (76, 77) auf die Kompressorausgangsleitung (73).

11. Druckluftaufbereitungssystem (100) nach Anspruch 10, **gekennzeichnet durch** vier Adsorptionseinrichtungen (10, 20, 30, 40).

12. Druckluftaufbereitungssystem (100) nach Anspruch 10 oder 11, **dadurch gekennzeichnet, dass** jede Adsorptionseinrichtung (10, 20, 30, 40).jeweils eingangsseitig mit einem Eingangsventil (13, 23, 33, 43) und/oder ausgangsseitig mit einem Ausgangsventil (12, 22, 32, 42) versehen ist.

13. Druckluftaufbereitungssystem (100) nach einem der Ansprüche 10 bis 12, **dadurch gekennzeichnet, dass** wenigstens eine Adsorptionseinrichtung (20, 30) über ein Ventil (52, 55) und/oder eine Drossel (53, 56) mit der Umgebungsluft zu verbinden sind.

14. Druckluftaufbereitungssystem (100) nach einem der Ansprüche 10 bis 13, **dadurch gekennzeichnet, dass** eine externe Beheizung (60) mit einem Gebläse (61) über eine Warmluftleitung mit wenigstens einer Adsorptionseinrichtung (20, 40) zu verbinden ist.

15. Druckluftaufbereitungssystem (100) nach einem der Ansprüche 10 bis 14, **dadurch gekennzeichnet, dass** zwischen dem Kompressor (70) und einer Einleitungsstelle der Rückführleitungen (76, 77) in die Kompressorausgangsleitung (73) oder in die Druckluftarbeitsleitung (79) eine Drossel (72) angeordnet ist.

## Claims

1. Method of dehumidifying air in the intake air stream of a compressed-air compressor (70), by using at least two through-flow adsorbers (10, 20, 30, 40), which contain a regeneratable hygroscopic material, air being drawn-in via at least one suction line, compressed in a compressor (70) to form compressed air and delivered to a compressed-air working line (79), said method having the following steps:
- drawing-in the intake air stream through adsorption of the moisture, contained in the air, during an intake phase t_{A1} via at least one first adsorber (20),
- regenerating the hygroscopic material in a second absorber (30) during a first regeneration phase t_{R1},
- switching-over the intake air stream, drawing-in the intake air stream through adsorption of the moisture, contained in the air, via the second adsorber (30),
- regenerating the hygroscopic material in the first adsorber (20) during a second regeneration phase t_{R2}, and
- repeating the steps,
wherein, for the regeneration of the hygroscopic material, a partial stream of heated compressed air is drawn-off between the compressor (70) and a cooler (71) connected downstream thereof and, after flowing-through at least one adsorber (10, 20, 30, 40), is conducted-back via the cooler (71) into the compressed-air working line (79).

2. Method according to claim 1, **characterised in that**
- in the first intake phase t_{A1}, intake air is guided in a first partial volumetric stream over the first adsorber (20) and simultaneously in a second partial volumetric stream over a third adsorber (10), and
- in the second intake phase t_{A2}, intake air is guided in a first partial volumetric stream over the second adsorber (30) and simultaneously in a second partial volumetric stream over a fourth adsorber (40).

3. Method according to claim 1 or 2, **characterised in that** the duration of the intake phases t_{A1}, t_{A2} corresponds to the respective duration of the subsequent regeneration phases t_{R1}, t_{R2}.

4. Method according to claim 1, **characterised in that**
- in the first intake phase t_{A1}, intake air is guided sequentially during a partial intake phase t_{A10} over the first adsorber (20) and then during a partial intake phase t_{A12} over a third adsorber (10), and
- in the second intake phase t_{A2}, intake air is guided sequentially during a partial intake phase t_{A20} over the second adsorber (30) and then during a partial intake phase t_{A22} over a fourth adsorber (40).

5. Method according to claim 4, **characterised in that** the first and second intake phases t_{A1}, t_{A2} are each divided into two partial intake phases t_{A10}, t_{A12}, t_{A20}, t_{A22} of equal duration.

6. Method according to claim 5, **characterised in that** the first regeneration phase t_{R1} is effected during the partial intake phases t_{A10}, t_{A12}, and the second regeneration phase t_{R2} is effected during the partial intake phases t_{A20}, t_{A22}.

7. Method according to one of claims 2 to 6, **characterised in that**, in each regeneration phase t_{R1}, t_{R2}, heated compressed air is conducted into an adsorber (10, 30), and simultaneously warm air is produced by means of a fan (61) and an additional heater (60) and conducted through an additional adsorber (20, 40).

8. Method according to one of claims 1 to 7, **characterised in that** the heated compressed air from the compressor (70) is heated by an additional heater (90) before introduction into an adsorber (10, 20, 30, 40).

9. Method according to one of claims 1 to 8, **characterised in that** the compressed air between compressor (70) and cooler (71) is decompressed to a pressure which is smaller than the pressure in a backflow line (76, 77).

10. Compressed-air production system (100, 100') for carrying out the method according to one of the preceding claims 1 to 9, having at least:
- two adsorbers (10, 30), which can be flowed-through and are filled with hygroscopic material,
- a compressor (70), the compressor outlet line (73) of which is connected to a cooler (71),
- an air supply switching valve (58) for connecting an air supply line to at least one adsorber (10, 30),
- a dry air valve (50) for connecting at least one adsorber (10, 30) to the compressor suction line (78), and
- a regenerating air valve (57, 58) for connecting at least one backflow line (76, 77), extending from an adsorber (10, 20, 30, 40), to the compressor outlet line (73).

11. Compressed-air production system (100) according to claim 10, **characterised by** four adsorbers (10, 20, 30, 40).

12. Compressed-air production system (100) according to claim 10 or 11, **characterised in that** each adsorber (10, 20, 30, 40) is respectively provided on the inlet side with an inlet valve (13, 23, 33, 43) and/or on the outlet side with an outlet valve (12, 22, 32, 42).

13. Compressed-air production system (100) according to one of claims 10 to 12, **characterised in that** at least one adsorber (20, 30) is to be connected to the ambient air via a valve (52, 55) and/or a throttle (53, 56).

14. Compressed-air production system (100) according to one of claims 10 to 13, **characterised in that** an external heater (60) with a fan (61) is to be connected to at least one adsorber (20, 40) via a warm air line.

15. Compressed-air production system (100) according to one of claims 10 to 14, **characterised in that** a throttle (72) is disposed between the compressor (70) and an inlet point of the backflow lines (76, 77) into the compressor outlet line (73) or into the compressed-air working line (79).

## Revendications

1. Procédé de séchage de l'air dans le flux d'air d'aspiration d'un compresseur d'air (70) basé sur l'utilisation d'au moins deux dispositifs d'adsorption (10, 20, 30, 40) pouvant être traversés par l'air d'aspiration, lesquels renferment un matériau hygroscopique capable d'être régénéré, l'air étant aspiré par au moins une conduite d'aspiration, comprimé en air comprimé dans un compresseur (70) et envoyé dans une conduite de travail à air comprimé (79), comportant les étapes suivantes :
- Aspiration du flux d'air d'aspiration avec adsorption, au cours d'une phase d'aspiration t_{A1}, de l'humidité contenue dans l'air par au moins un premier dispositif d'adsorption (20),
- Régénération, au cours d'une première phase de régénération t_{R1}, du matériau hygroscopique dans un deuxième dispositif d'adsorption (30),
- Inversion du flux d'air d'aspiration, aspiration du flux d'air d'aspiration avec adsorption de l'humidité contenue dans l'air par le deuxième dispositif d'adsorption (30),
- Régénération, au cours d'une seconde phase de régénération t_{R2}, du matériau hygroscopique dans le premier dispositif d'adsorption (20),
- Répétition des étapes,
un flux partiel d'air comprimé réchauffé étant dérivé entre le compresseur (70) et un refroidisseur (71) situé en aval de celui-ci en vue de la régénération du matériau hygroscopique et renvoyé, après avoir traversé au moins un dispositif d'adsorption (10, 20, 30, 40), dans la conduite de travail à air comprimé (79) par l'intermédiaire du refroidisseur (71).

2. Procédé selon la revendication 1, **caractérisé en ce que**
- dans la première phase d'aspiration t_{A1}, un premier flux volumique partiel de l'air d'aspiration est envoyé à travers le premier dispositif d'adsorption (20) et un second flux volumique partiel de l'air d'aspiration est envoyé en même temps à travers un troisième dispositif d'adsorption (10) et **en ce que**
- dans la seconde phase d'aspiration t_{A2}, un premier flux volumique partiel de l'air d'aspiration est envoyé à travers le deuxième dispositif d'adsorption (30) et un second flux volumique partiel de l'air d'aspiration est envoyé en même temps à travers un quatrième dispositif d'adsorption (40).

3. Procédé selon la revendication 1 ou 2, **caractérisé en ce que** la durée des phases d'aspiration t_{A1}, t_{A2} correspond à la durée de chacune des phases de régénération t_{R1}, t_{R2} subséquentes.

4. Procédé selon la revendication 1, **caractérisé en ce que**
- dans la première phase d'aspiration t_{A1}, l'air d'aspiration est envoyé successivement à travers le premier dispositif d'adsorption (20) au cours d'une phase d'aspiration partielle t_{A10} et ensuite à travers un troisième dispositif d'adsorption (10) au cours d'une phase d'aspiration partielle t_{A12} et **en ce que**
- dans la seconde phase d'aspiration t_{A2}, l'air d'aspiration est envoyé successivement à travers le deuxième dispositif d'adsorption (30) au cours d'une phase d'aspiration partielle t_{A20} et ensuite à travers un quatrième dispositif d'adsorption (40) au cours d'une phase d'aspiration partielle t_{A22}.

5. Procédé selon la revendication 4, **caractérisé en ce que** la première phase d'aspiration t_{A1} et la seconde phase d'aspiration t_{A2} sont subdivisées chacune en deux phases d'aspiration partielles t_{A10}, t_{A12}, t_{A20}, t_{A22} de même durée.

6. Procédé selon la revendication 5, **caractérisé en ce que** la première phase de régénération t_{R1} a lieu au cours des phases d'aspiration partielles t_{A10}, t_{A12} et la seconde phase de régénération t_{R2} a lieu au cours des phases d'aspiration partielles t_{A20}, t_{A22}.

7. Procédé selon l'une quelconque des revendications 2 à 6, **caractérisé en ce que** dans chacune des phases de régénération t_{R1}, t_{R2}, de l'air comprimé réchauffé est envoyé dans un dispositif d'adsorption (10, 30) et **en ce qu'**en même temps, de l'air chaud est généré au moyen d'une soufflerie (61) et d'un chauffage auxiliaire (60) et envoyé à travers un autre dispositif d'adsorption (20, 40).

8. Procédé selon l'une quelconque des revendications 1 à 7, **caractérisé en ce que** l'air comprimé réchauffé du compresseur (70) est réchauffé par un chauffage auxiliaire (90) avant l'introduction dans un dispositif d'adsorption (10, 20, 30, 40).

9. Procédé selon l'une quelconque des revendications 1 à 8, **caractérisé en ce que** l'air comprimé est détendu entre le compresseur (70) et le refroidisseur (71) à une pression inférieure à la pression dans une conduite de retour (76, 77).

10. Système de traitement d'air comprimé (100, 100') destiné à la mise en oeuvre du procédé selon l'une quelconque des revendications précédentes 1 à 9, comportant au moins:
- deux dispositifs d'adsorption (10, 30) renfermant un matériau hygroscopique et pouvant être traversés par l'air d'aspiration,
- un compresseur (70) dont la conduite de sortie (73) est reliée à un refroidisseur (71),
- une soupape d'inversion d'air amené (58) destinée à relier une conduite d'air amené à au moins un dispositif d'adsorption (10, 30),
- une soupape à air sec (50) destinée à coupler au moins un dispositif d'adsorption (10, 30) à la conduite d'aspiration (78) du compresseur,
- une soupape à air de régénération (57, 58) destinée à coupler au moins une conduite de retour (76, 77) partant d'un dispositif d'adsorption (10, 20, 30, 40) à la conduite de sortie (73) du compresseur.

11. Système de traitement d'air comprimé (100) selon la revendication 10, **caractérisé par** quatre dispositifs d'adsorption (10, 20, 30, 40).

12. Système de traitement d'air comprimé (100) selon la revendication 10 ou 11, **caractérisé en ce que** chaque dispositif d'adsorption (10, 20, 30, 40) est pourvu chaque fois du côté de l'entrée d'une soupape d'entrée (13, 23, 33, 43) et/ou du côté de la sortie d'une soupape de sortie (12, 22, 32, 42).

13. Système de traitement d'air comprimé (100) selon l'une quelconque des revendications 10 à 12, **caractérisé en ce qu'**au moins un dispositif d'adsorption (20, 30) peut être relié à l'air ambiant par l'intermédiaire d'une soupape (52, 55) et/ou d'une valve papillon (53, 56).

14. Système de traitement d'air comprimé (100) selon l'une quelconque des revendications 10 à 13, **caractérisé en ce qu'**un chauffage externe (60) comportant une soufflerie (61) peut être relié à au moins un dispositif d'adsorption (20, 40) par l'intermédiaire d'une conduite d'air chaud.

15. Système de traitement d'air comprimé (100) selon l'une quelconque des revendications 10 à 14, **caractérisé en ce qu'**une valve papillon (72) est disposée dans la conduite de sortie (73) du compresseur entre le compresseur (70) et un point d'introduction des conduites de retour (76, 77) ou dans la conduite de travail à air comprimé (79).
